# EUROPÄISCHE PATENTSCHRIFT

(11) **EP 0 848 907 B1**
(45) Veröffentlichungstag und Bekanntmachung des Hinweises auf die Patenterteilung: **17.11.1999**
(21) Anmeldenummer: 97122499.3
(22) Anmeldetag: 19.12.1997
(51) Int. Cl.: A01N 33/04

(54) **Spraydesinfektionsmittelzubereitung**
Sprayable disinfecting preparation
Préparation désinfectante pulvérisable

(30) Priorität: 21.12.1996 DE 19653785
(43) Veröffentlichungstag der Anmeldung: 24.06.1998
(73) Patentinhaber: B. Braun Medical AG, 6021 Emmenbrücke (CH)
(72) Erfinder: Widulle, Herbert, Dr., 22761 Hamburg (DE)
(74) Vertreter: Weber, Thomas, Dr.Dipl.-Chem.

(56) Entgegenhaltungen:
- EP-A- 0 333 143
- EP-A- 0 343 605
- DE-A- 19 523 320

## Beschreibung

Die Erfindung betrifft eine wässrig-alkoholische Spraydesinfektionsmittelzubereitung zur Inaktivierung von behüllten und unbehüllten Viren auf unbelebten Oberflächen. Die Zubereitung kann gleichzeitig zur Reinigung dieser Oberflächen eingesetzt werden.

Die Inaktivierung von unbehüllten Viren mit chemischen Desinfektionsmitteln ist schwierig. Als Leitvirus für die unbehüllten Viren dient das Poliovirus. Zu dieser Virengruppe zählt aber auch das Hepathitis A-Virus.

Nach dem Stand der Technik sind für die Inaktivierung von Polioviren Mittel auf Basis Ethanol bevorzugt. Derartige Mittel sind aber nicht wirksam gegen Papovaviren SV-40, auch wenn der Ethanolgehalt bei 90 Gew.-% liegt.

Unter unbelebten Oberflächen sind alle Oberflächen ganz gleich welcher Struktur zu verstehen, die aus künstlichen Materialien bestehen.

Die DE-A-44 24 325 beschreibt eine alkoholische Desinfektionsmittelzubereitung für die Hände- und Hautdesinfektion, die gegen unbehüllte Viren, wie beispielsweise Polioviren in kurzer Zeit wirksam ist. Die Desinfektionsmittelzubereitung umfaßt wenigstens 80 Gew.-% Ethanol und/oder Methanol und enthält wenigstens 0,3 Gew.-% Butanon (Methylethylketon).

Die EP-A-0 176 720 beschreibt ein Händedesinfektionsmittel gegen unbehüllte Viren umfassend wenigstens 70% Ethanol oder Methanol, Wasser, Glycerin und Rizinusöl. Dieses Mittel ist gegenüber unbehüllten Viren, wie Polioviren nur sehr langsam wirksam.

Die EP-A-0 251 303 beschreibt ebenfalls ein gegen unbehüllte Viren, wie beispielsweise Polioviren wirksames Desinfektionsmittel auf der Basis Ethanol und/oder Propanol. Das Mittel enthält daneben 0,5 bis 5 Gew.-% einer Mono-, Di- oder Tricarbonsäure mit einer Kettenlänge von 2 bis 4 Kohlenstoffatomen oder Sulfaminsäure. Zu erwähnen ist der hohe Ethanolgehalt von wenigstens 70% und der sehr niedrige pH-Wert, welcher auf den vergleichsweisen hohen Anteil von Carbonsäuren bzw. Sulfaminsäuren zurückzuführen ist.

Die DE-A-42 00 499 beschreibt ein Desinfektionsmittel auf Alkoholbasis, welches zusätzlich adstringierend wirkende Aluminiumsalze (Lewis-Säuren) enthält.

Die WO-A-94/22305 beschreibt eine wässrige viruzide Zusammensetzung, die in Krankenhäusern zur Desinfektion eingesetzt werden kann. Die Zusammensetzung enthält ein quaternäres Alkylammoniumsalz in Gegenwart einer alkalischen Verbindung (Alkalimetallhydroxide, Alkalimetallcarbonate) in einer Lösung, die zu wenigstens 90% aus Wasser besteht und die einen pH-Wert von 10 bis 12 besitzt. Die Zusammensetzung kann Alkohol enthalten.

Eine andere Möglichkeit unbehüllte Viren zu inaktivieren, ist die Verwendung starker Säuren. Reinigungslösungen mit stark sauren pH-Werten zerstören die Eiweißhülle des Virus und Verhindern so die Infektiosität. Auf dieser Weise wirken zum Beispiel Sanitärreiniger.

EP-A-0 343 605 offenbart eine aldehydfreie flüssige Desinfektionsmittelzusammensetzung mit Wirkung gegen Mykobakterien, insbesondere Mykobakterium tuberculosis, die insbesondere zur Desinfektion von Instrumenten oder Oberflächen geeignet ist. Das Desinfektionsmittel enthält N,N-Bis-(3-aminopropyl)-laurylamin als wirksame Komponente in einer wässrig-alkoholischen Lösung. Bei den Alkoholen handelt es sich um Alkohole mit 1 bis 4 Kohlenstoffatomen. Die Zusammensetzung enthält ferner Tenside, vorzugsweise anionische oder nichtionische Tenside.

Ausgehend davon, war es eine Aufgabe der vorliegenden Erfindung, ein Spraydesinfektionsmittelzubereitung zur Verfügung zu stellen, welche gegen behüllte und unbehüllte Viren, insbesondere Polioviren in kurzer Zeit wirksam ist und welche reinigende Wirkung hat. Die Zubereitung sollte mit den bisherigen Verfahren der Sprayapplikation applizierbar und mit üblichen Reinigungsgeräten (Lappen, Schwamm, Tuch, etc.) gut verteilbar und wischbar sein. Ferner muß die Zubereitung mit Oberflächen aus Kunststoff, Silikon, Keramik, Glas und Metall, insbesondere Edelstahl, Aluminium, Chrom, Nickel und Edelmetall sowie Kunstleder und Gummi kompatibel sein. Des weiteren soll die Zubereitung Kompatibilität mit hochglänzend oder seidenmatt lackierten harten Oberflächen, beispielsweise Labormöbeln, aufweisen. Die genannten Materialien sollten von der Zubereitung weder angegriffen noch sonstwie in der Struktur oder Qualität verändert werden. Es war eine weitere Aufgabe der Erfindung, eine Zubereitung bereitzustellen, die nach der definierten Versuchsmethodik der Deutschen Gesellschaft für Hygiene und Mikrobiologie (DGHM) bei der Desinfektion im Konzentrat in 15 Minuten und in 5 Minuten ohne Belastung im Flächenversuch eine vollständige Abtötung der Keine auf der kontaminierten Fläche bewirkt.

Dementsprechend war es insbesondere eine Aufgabe der Erfindung eine Spraydesinfektionsmittelzubereitung bereitzustellen, mit der bei der Desinfektion der oben genannten Oberflächen eine Inaktivierung von SV-40 Viren und Polioviren in 5 Minuten erreicht werden kann. Darüber hinaus sollte die Zubereitung wirksam sein gegenüber Staphylokokkus aureus, Pseudomonas aeruginosa, Escherichia coli, Candida albicans und Mycobakterium terrae.

Die Spraydesinfektionsmittelzubereitung muß ferner bei Raumtemperatur eine ausreichende Zeit auf den behandelten Oberflächen verbleiben, um verwischbar und wirksam zu sein. Rückstände der Zubereitung müssen jedoch durch übliche Reinigungsverfahren wieder einfach von der behandelten Oberfläche entfernbar sein. Die Zusammensetzung soll ferner auf den behandelten Oberflächen keine Fettfilme oder Streifen hinterlassen. Selbstverständlich soll die Zubereitung außerdem bei der Lagerung stabil sein und nach ihrer Anwendung biologisch abbaubar sein.

Die im Stand der Technik bekannten Desinfektionsmittel sind entweder zu wenig wirksam, trocknen bedingt durch den zu hohen Alkoholgehalt zu schnell auf oder greifen bedingt durch ihren Säurengehalt (Lewis-Säuren, Broenstedt-Säuren) oder Basengehalt Edelstahl und Aluminiumoberflächen an. Ferner sind sie, bedingt durch den Anteil an hautpflegenden Zusätzen, für die Verwendung auf anderen Oberflächen als Haut ungeeignet.

Die erfindungsgemäße Aufgabe wurde gelöst durch eine Spraydesinfektionsmittelzubereitung mit einem pH-Wert von 7 bis weniger als 10 umfassend neben Wasser
(a) 30 bis 70 Gew.-% Ethanol,
(b) 0,02 bis 1 Gew.-% wenigstens einer Aminkomponente der nachfolgenden Formeln

   H[HNCH₂CH₂CH₂]ₙ-NR[CH₂CH₂CH₂NH]ₚH (I)

   und/oder

   H[HN-CH₂CH₂CH₂]_{q}-NH-CH₂CH₂CH₂NHR (II)

   worin n, p und q unabhängig voneinander 1, 2 oder 3 sein können, und der Substituent R ein geradkettigter oder verzweigter, gesättigter oder ungesättigter oder cyclischer Alkylrest mit 6 bis 18 Kohlenstoffatomen sein kann, oder deren Gemische,
(c) 0,2 bis 2 Gew.-% wenigstens eines Terpenkohlenwasserstoffes, jeweils bezogen auf die Gesamtmenge der wässrigen Zubereitung.

Die erfindungsgemäße Zusammensetzung ist frei von freien Aldehyden und Ketonen, um Reaktionen mit Blut bei der Reinigung zu vermeiden. Darüber hinaus enthält die erfindungsgemäße Zubereitung keine freien Säuren, wie insbesondere Broenstedt-Säuren oder Lewis-Säuren. Die Zusammensetzung ist ferner frei von starken Alkalien, wie Alkalihydroxiden und Alkalicarbonaten, insbesondere Natriumhydroxid oder Natriumcarbonat. Die erfindungsgemäße Zubereitung enthält außerdem keine Oxidantien, wie organische und anorganische Peroxide, beispielsweise Wasserstoffperoxid oder seine Derivate. Die erfindungsgemäße Zubereitung enthält darüber hinaus keine Fette oder andere Pflegekomponenten für die Hände, wie beispielsweise Fettsäurealkylester oder Feuchthaltemittel, wie Alkylenglycole.

Überraschenderweise wurde gefunden, daß die Anwesenheit von Terpenkohlenwasserstoffen in der Zubereitung die Wirkung der Aminkomponente gegen Viren maßgeblich verstärkt.

Ist der pH-Wert der Zubereitung kleiner als 7, so kommt es zu einer drastischen Verschlechterung der antiviralen Aktivität. Bei pH-Werten von 10 oder darüber treten Schäden bei den behandelten Oberflächen, insbesondere bei Aluminium, Chrom und Edelstahl auf. Besonders bevorzugt beträgt der pH-Wert der Zubereitung daher zwischen 8 und 9,5.

Der Ethanolanteil in der Zubereitung beträgt vorzugsweise 40 bis 70 Gew.-%, besonders bevorzugt bis 60 Gew.-%.

Der Anteil der Aminkomponente in der Zubereitung beträgt vorzugsweise 0,05 bis 0,5, besonders bevorzugt 0,1 bis 0,4 Gew.-%. Bevorzugt werden die Gemische der Amine eingesetzt. Besonders bevorzugt sind Amine, in welchen der Substituent R bis zu 12 Kohlenstoffatome enthält. Besonders bevorzugt als Aminkomponente ist Lonzabac 12 (Handelsprodukt der Firma Lonza).

Als weiteren wesentlichen Bestandteil enthält die erfindungsgemäße Zubereitung wenigstens einen Terpenkohlenwasserstoff. Die Terpenkohlenwasserstoffkomponente ist ausgewählt aus acyclischen, mono- oder bicyclischen Terpenen, die vorzugsweise wenigstens eine, besonders bevorzugt jedoch wenigstens zwei Doppelbindungen aufweisen. Die Terpene enthalten weniger als 20, bevorzugt bis zu 15, besonders bevorzugt bis zu 10 Kohlenstoffatome. Mit umfaßt sind dabei die entsprechenden Stereo-/Strukturisomere, sofern sie existieren. Der Anteil der Terpene in der Zubereitung beträgt vorzugsweise 0,2 bis 1 Gew.-%. Bevorzugte Terpene sind Limonen, insbesondere Citrusöl (Citrusterpen), beta-Myrcen, beta-Ocimen und Camphen. Es wurde gefunden, daß der Zusatz von Terpenkohlenwasserstoffen einen entscheidenden Einfluß auf die Wirksamkeit der erfindungsgemäßen Desinfektionsmittelzusammensetzung hat.

Die erfindungsgemäße Desinfektionsmittelzubereitung kann ferner quaternäre Ammoniumverbindungen, Pyridinium- und Chinoliniumverbindungen, Guanide, Biguanide, Polyguanide und Benzamidine enthalten. Ferner können Tenside und Reduktionsmittel in der Zubereitung enthalten sein.

Die Ammonium-, Pyridinium- und Chinoliniumverbindungen sind ausgewählt aus quaternären Ammoniumverbindungen der Formel [NR¹R²R³R⁴]^{Å}X-, Pyridiniumverbindungen der allgemeinen Strukturformel 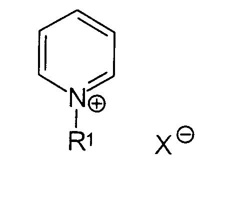 sowie
Chinoliniumverbindungen der allgemeinen Strukturformel 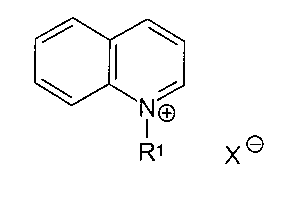 wobei in der Formel für die quaternären Ammonium-, Pyridinium- und Chinoliniumverbindungen R¹ eine gesättigte oder ungesättigte, verzweigte oder lineare Alkylgruppe mit 10 bis 18 Kohlenstoffatomen und R², R³ und R⁴, unabhängig voneinander, eine Methyl-, Benzyl-, mit einer C₁-C₆-Alkylgruppe und/oder mit Halogen substituiertes Benzyl oder eine gesättigte oder ungesättigte, verzweigte oder lineare Alkylgruppe mit 10 bis 18 Kohlenstoffatomen, und X- ein Halogenanion, insbesondere ein Fluorid-, Chlorid- oder Bromidion oder eine Propionat-, Acetat-, Methyl- oder Ethylsulfatgruppe oder ein anderes übliches Gegenanion ist.

Besonders bevorzugte quaternäre Ammoniumverbindungen sind C₈-C₁₈-Alkylbenzyldimethylammoniumchloride, d.h. Benzalkoniumchloride (z.B. Benzalkon A).

Als Guanide sind insbesondere die Biguanide, polymere Biguanide und deren Salze (Hydrochloride, Hydrobromide) zu nennen. Ein bevorzugter Vertreter der Biguanide ist insbesondere das Chlorhexidin, ein Vertreter eines polymeren Biguanids ist das Vantocil®IB (Hydrochlorid eines polymeren Biguanids). Ein bevorzugter Vertreter der Benzamidine ist insbesondere Hexamidin (4,4'-Hexamethylendioxy-bis-benzamidin).

Die Ammonium,- Pyridinium- und Chinoliniumverbindungen, Guanide, Biguanide, Polyguanide und Benzamidine können in einem Anteil von 0,01 bis 2 Gew.-%, vorzugsweise 0,01 bis 0,4 Gew.-% und besonders bevorzugt von 0,2 bis 0,4 Gew.-% in der erfindungsgemäßen Zubereitung enthalten sein.

Die erfindungsgemäße Zubereitung kann ferner 0,01 bis 2 Gew.-%, vorzugsweise 0,2 bis 0,5 Gew.-% nichtionische Tenside enthalten.

Als nichtionische Tenside werden vorzugsweise Ethoxylate von verzweigten und unverzweigten 4 bis 14 Kohlenstoffatomen enthaltenden Fettalkoholen mit 2 bis 20 Ethylenoxideinheiten, oder Ethoxylate von Pflanzenölen oder Fettsäuren aus pflanzlichen oder tierischen Ölen mit 20 bis 50 Ethylenoxideinheiten eingesetzt. Beispielhaft sei ein Ethoxylat eines 11 Kohlenstoffatome enthaltenden Fettalkohols mit 7 Ethylenoxid (EO)-Einheiten erwähnt. Als Pflanzenöle sind insbesondere Olivenöl, Sojaöl, Leinöl und Rizinusöl zu nennen. Die Pflanzenölethoxylate oder Fettsäureethoxylate aus pflanzlichen oder tierischen Ölen können hydriert sein.

Die erfindungsgemäße Zubereitung kann darüber hinaus in Bezug auf die molare Menge der Aminkomponente geringe molare Mengen anionischer Tenside enthalten. Im einzelnen kann die Zubereitung bis zu 25 mol%, vorzugsweise bis zu 12,5 mol%, bezogen auf die molare Menge der Aminkomponente, eines anionischen Tensids oder Gemische davon enthalten. Bei größeren molaren Verhältnissen von anionischem Tensid zu Aminkomponente ist die Wirksamkeit der Zubereitungen nicht mehr gegeben.

Als anionische Tenside werden vorzugsweise die Sulfate von 8 bis 18, besonders bevorzugt von 10 bis 16 Kohlenstoffatomen enthaltenden gesättigten oder ungesättigten Alkoholen eingesetzt. Typische Vertreter dieser Gruppe sind das Natrium- oder Ammoniumlaurylsulfat und das Triethanolaminlaurylsulfat. Darüber hinaus kommen als anionische Tenside, insbesondere die Triethanolaminsalze von C₈ bis C₁₂-Alkylethercarbonsäuren in Frage.

Die erfindungsgemäßen Zubereitungen können ferner bis zu 0,5 Gew.-% eines Reduktionsmittels als Stabilisator enthalten. Hierzu kommen insbesondere tert.-Butylhydroxyanisol (BHA, tert.-Butylmethoxyphenol) oder Butylhydroxytoluol (BHT, 2,6-Di-tert.-Butylmethylphenol) in Frage.

Die erfindungsgemäße Zubereitung kann darüber hinaus noch zu diesem Zweck übliche und dem Fachmann bekannte Farbstoffe enthalten.

Die erfindungsgemäße Spraydesinfektionsmittelzubereitung besitzt gut reinigende Eigenschaften, riecht gut und ist mit einem Lappen oder Tuch gut verteilbar und aufwischbar. Die Zubereitung trocknet nicht zu schnell auf und verfügt über eine gute Stabilität in geeigneten Behältnissen (Glas oder Polyethylen) über wenigstens 6 Monate stabil. Erwähnenswert ist jedoch, daß die erfindungsgemäße Zubereitung gegen üblichen Oberflächenmaterialien, wie Kunststoff, Silicon, Keramik, Glas, Metall, insbesondere Edelstahl, Chrom, Nickel, Aluminium und Edelmetallen sowie Kunstleder, Gummi oder lackierten Oberflächen in keiner Weise aggressiv ist, sie also auch nach mehrfachen Anwendungen der Zubereitung nicht verändert werden.

In Versuchen konnte gezeigt werden, daß Polioviren ohne Belastung (Viren in destilliertem H₂O) innerhalb von 5 Minuten und unter Belastung (Viren in Rinderserum) innerhalb von 10 Minuten um 99,99% reduziert werden konnten (Versuchsmethodik gemäß DVV, Deutsche Gesellschaft für die Verhütung von Viruserkrankungen).

Die nachfolgenden Beispiele sollen die Erfindung näher erläutern. Alle Mengenanteile in der Beschreibung und in den Beispielen sind in Gew.-% angegeben, jeweils bezogen auf die Gesamtmenge der wässrigen Zubereitung.

### Beispiele

In den nachfolgenden Beispielen wurde die Viruswirksamkeit im Suspensionsversuch gemäß den Methoden der DVV (Deutsche Gesellschaft für die Verhütung von Viruserkrankungen) nachgewiesen.

In der nachfolgenden Tabelle 1 sind die Vergleichsbeispiele 3 und 4 den Beispielen 1 und 2 gemäß der Erfindung gegenübergestellt. Es wurde gefunden, daß die erfindungsgemäßen Zusammensetzungen umfassend Ethanol, die Aminkomponente und einen Terpenkohlenwasserstoff in der Wirksamkeit gegen Polioviren (99,99% Reduktion, versuchsbedingter Zusatz von 20 Vol% Virussuspension zum Konzentrat) in Zusammensetzungen der Vergleichsbeispiele bei weitem überlegen sind.

**Tabelle 1**

| | Beispiel 1 Gew.-% | Beispiel 2 Gew.-% | Vergleichsbeispiel 3 Gew.-% | Vergleichsbeispiel 4 Gew.-% |
|---|---|---|---|---|
| Ethanol | 60,0 | 60,0 | 60,0 | 60,0 |
| Lonzabac 12¹⁾ | 0,1 | 0,2 | 0,1 | 0,2 |
| Benzalkon A²⁾ | 0,2 | - | - | - |
| Alkylarylsulfonsäure³⁾ | - | - | 0,2 | 0,2 |
| Citrusterpen (Citrusöl) | 0,5 | 0,5 | 0,5 | 0,5 |
| hydriertes Rizinusöl 40 EO | 0,2 | 0,2 | 0,2 | 0,2 |
| destilliertes Wasser | auf 100 | auf 100 | auf 100 | auf 100 |
| pH-Wert | ca. 8 | ca. 8 | ca. 3 | ca. 4 |
| wirksam gegen Polioviren in Minuten | 10 | 5 | nicht wirksam | nicht wirksam |

| | | | | |
|---|---|---|---|---|
| ¹⁾ Aminkomponente | | | | |
| ²⁾ Benzalkoniumchlorid | | | | |
| ³⁾ Dodecylbenzolsulfonsäure (Marlon® AS3, Handelsprodukt der Firma Hüls) | | | | |

Nickel, Chrom und Aluminium, Kunstleder oder Gummi sowie auf lackierte Oberflächen aufgesprüht und nach 30 Sekunden mit einem Tuch abgewischt. Es wurde durch optische Untersuchung (Augenschein) der behandelten Oberfläche im Vergleich zu einer gleichen jedoch unbehandelten Oberfläche gefunden, daß sich die behandelte Oberfläche nicht verändert hat.

Ferner wurde gefunden, daß die erfindungsgemäßen Zusammensetzungen bei 40 °C in einem Glasbehältnis und bei Raumtemperatur in einem Polyethylenbehältnis wenigstens 6 Monate stabil sind.

**Tabelle 2**

| | Beispiel 5 (Gew.-%) | Beispiel 6 (Gew.-%) |
|---|---|---|
| Ethanol | 60 | 60 |
| Lonzabac | 0,30 | 0,40 |
| Citrusterpen (Citrusöl) | 0,50 | 0,50 |
| hydriertes Rizinusöl(40 EO) | 0,20 | 0,20 |
| destilliertes Wasser | auf 100 | auf 100 |
| pH-Wert | 8-9 | 8-9 |

In der nachfolgenden Tabelle 3 ist die Viruswirksamkeit von erfindungsgemäßen ethanolischen Zubereitungen gegen den Leitvirus der unbehüten Viren (Papovavirus SV-40) wiedergegeben. Der Virusgehalt in der Kontrolle war 7,55 ID 50/ml (= Virustiter in der Suspension, logarithmische Angabe). Die Versuche wurden nach Standardversuchen gemäß der DVV Kontrolle war 7,55 ID 50/ml (= Virustiter in der Suspension, logarithmische Angabe). Die Versuche wurden nach Standardversuchen gemäß der DVV ohne Eiweißbelastung so durchgeführt, daß jeweils zu 8 ml der erfindungsgemäßen Zubereitungen gemäß den Beispielen 2, 5 und 6 (vgl. Tabelle 2) 2 ml der wässrigen Virussuspension gegeben wurden.

**Tabelle 3**

| | Titerreduktion (Δ Log ID 50) | | |
|---|---|---|---|
| | 1 min | 2 min | 5 min |
| Beispiel 2 | 0,98 | 2,87 | 4,12 |
| Beispiel 5 | 1,15 | 2,54 | 4,35 |
| Beispiel 6 | 0,84 | 1,89 | 4,27 |

In der nachfolgenden Tabelle 4 wird der Einfluß des Terpenkohlenwasserstoffs auf die Poliowirksamkeit der Zubereitung beispielhaft belegt (Versuchsdurchführung wie Beispiel zu Tabelle 1):

**Tabelle 4**

| | Beispiel 7 Gew.-% | Vergleichsbeispiel 8 Gew.-% |
|---|---|---|
| Ethanol | 60,0 | 60,0 |
| Lonzabac 12 | 0,2 | 0,2 |
| Citrusterpen (Citrusöl) | 0,5 | -- |
| hydriertes Rizinusöl 40 EO | 0,2 | 0,2 |
| destilliertes Wasser | auf 100 | auf 100 |
| pH-Wert | ca. 8 | ca. 8 |
| wirksam gegen Polioviren in Minuten | 5 | 15 |

Wie durch das erfindungsgemäße Beispiel 7 (entspricht Beispiel 2) gezeigt, kann die Inaktivierungszeit für Polio durch den Zusatz von Terpenkohlenwasserstoffen in signifikantem Umfang und in einem für die praktische Anwendung erheblichen Ausmaß im Vergleich zu gleichen Zubereitungen, die das Terpen nicht enthalten (Vergleichsbeispiel 8), gesenkt werden. Die Inaktivierungszeit für Polio (oder auch Hepathitis A-Viren) und die übliche Wartezeit nach einer Desinfektion einer Tischplatte oder eines Instruments fallen zusammen (etwa 5 Minuten).

## Patentansprüche

1. Spraydesinfektionsmittelzubereitung mit einem pH-Wert von 7 bis weniger als 10 umfassend neben Wasser
(a) 30 bis 70 Gew.-% Ethanol,
(b) 0,02 bis 1 Gew.-% wenigstens einer Aminkomponente der nachfolgenden Formeln
H[HNCH₂CH₂CH₂]ₙ-NR[CH₂CH₂CH₂NH]ₚH (I)
und/oder
H[HN-CH₂CH₂CH₂]_{q}-NH-CH₂CH₂CH₂NHR (II)
worin n, p und q unabhängig voneinander 1, 2 oder 3 sein können, und der Substituent R ein geradkettigter oder verzweigter, gesättigter oder ungesättigter oder cyclischer Alkylrest mit 6 bis 18 Kohlenstoffatomen sein kann, oder deren Gemische,
(c) 0,2 bis 2 Gew.-% wenigstens eines Terpenkohlenwasserstoffes,
jeweils bezogen auf die Gesamtmenge der wässrigen Zubereitung.

2. Zubereitung nach Anspruch 1, zusätzlich umfassend
0,01 bis 2,0 Gew.-% einer Verbindung, die ausgewählt ist aus quaternären Ammonium-, Pyridinium-, Chinoliniumverbindungen, sowie Guaniden, Biguaniden, Polyguaniden, Benzamidinen und deren Salzen.

3. Zubereitung nach Anspruch 2, dadurch gekennzeichnet, daß
- die Ammoniumverbindungen ausgewählt sind aus Verbindungen der Formel [NR¹R²R³R⁴]^{Å}X-
- die Pyridiniumverbindungen ausgewählt sind aus Verbindungen mit der Strukturformel 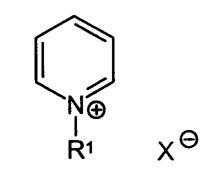
- und die Chinoliniumverbindungen ausgewählt sind aus Verbindungen mit der Strukturformel 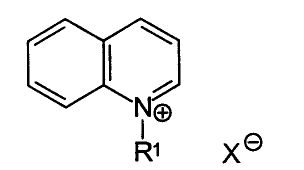 wobei in der Formel für die Ammonium-, Pyridinium- und Chinoliniumverbindungen R¹ eine gesättigte oder ungesättigte, verzweigte oder lineare Alkylgruppe mit 10 bis 18 Kohlenstoffatomen und
R², R³ und R⁴ unabhängig voneinander eine Methyl-, Benzyl-, substituiertes Benzyl- oder eine gesättigte oder ungesättigte, verzweigte oder lineare Alkylgruppe mit 10 bis 18 Kohlenstoffatomen und
X- ein Halogenanion, eine Acetat-, Propionat-, Methyl- oder Ethylsulfat-Gruppe oder ein anderes übliches Gegenanion ist.
Zubereitung nach Anspruch 1, dadurch gekennzeichnet, daß sie zusätzlich 0,01 bis 2,0 Gew.-% nichtionische Tenside umfaßt.

4. Zubereitung nach Anspruch 1, dadurch gekennzeichnet, daß sie zusätzlich 0,01 bis 2,0 Gew.-% nichtionische Tenside umfaßt.

5. Zubereitung nach Anspruch 4, dadurch gekennzeichnet, daß als nichtionische Tenside Ethoxylate von verzweigten und unverzweigten 4 bis 14 Kohlenstoffatomen enthaltenden Fettalkoholen mit 2 bis 20 Ethylenoxideinheiten oder Ethoxylate von Pflanzenölen oder Fettsäuren aus pflanzlichen oder tierischen Ölen mit 20 bis 50 Ethylenoxideinheiten eingesetzt werden.

6. Zubereitung nach einem oder mehreren der Ansprüche 1 bis 5, dadurch gekennzeichnet, daß sie zusätzlich bis zu 25 mol%, bezogen auf die Aminkomponente eines anionischen Tensids umfaßt.

7. Zubereitung nach Anspruch 6, dadurch gekennzeichnet, daß das anionische Tensid ausgewählt ist aus der Gruppe der Sulfate von 8 bis 18 Kohlenstoffatomen enthaltenden, gesättigten oder ungesättigten Alkoholen und Triethanolaminsalzen von 8 bis 12 Kohlenstoffatomen enthaltenden Alkylethercarbonsäuren.

8. Zubereitung nach Anspruch 1, dadurch gekennzeichnet, daß die Terpenkomponente acyclisch, mono- oder bicyclisch ist.

9. Zubereitung nach Anspruch 8, dadurch gekennzeichnet, daß die Terpenkomponente wenigstens eine Doppelbindung enthält.

10. Verwendung der Zubereitung nach einem oder mehreren der Ansprüche 1 bis 9 zur Desinfektion von unbelebten Oberflächen.

11. Verwendung der Zubereitung nach einem oder mehreren der Ansprüche 1 bis 9 als Reinigungsmittel für unbelebte Oberflächen.

12. Verwendung nach Anspruch 10 oder 11, dadurch gekennzeichnet, daß die Oberflächen ausgewählt sind aus Kunststoff, Silicon, Keramik, Glas, Edelstahl, Edelmetall, Aluminium, Chrom, Nickel, Kunstleder, Gummi oder lackierten Oberflächen.

## Claims

1. A spray disinfectant formulation having a pH value of from 7 to less than 10, comprising, in addition to water:
(a) from 30 to 70% by weight of ethanol;
(b) from 0.02 to 1% by weight of at least one amine component of the following formulae
H[HNCH₂CH₂CH₂]ₙ-NR[CH₂CH₂CH₂NH]ₚH (I)
and/or
H[HN-CH₂CH₂CH₂]_{q}-NH-CH₂CH₂CH₂NHR (II)
wherein n, p and q are independently 1, 2 or 3, and the substituent R is a straight or branched-chain saturated or unsaturated or cyclic alkyl residue containing from 6 to 18 carbon atoms, or mixtures thereof;
(c) from 0.2 to 2% by weight of at least one terpene hydrocarbon;
respectively based on the total amount of the aqueous formulation.

2. The formulation according to claim 1, additionally comprising from 0.01 to 2.0% by weight of a compound selected from quarternary ammonium, pyridinium, chinolinium compounds, and guanides, biguanides, polyguanides, benzamidines, and salts thereof.

3. The formulation according to claim 2, characterized in that
- said ammonium compounds are selected from compounds of formula [NR¹R²R³R⁴]⁺X⁻;
- said pyridinium compounds are selected from compounds having the structural formula 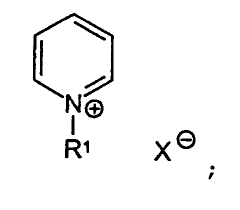 and
- said chinolinium compounds are selected from compounds having the structural formula 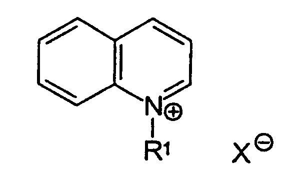 wherein, in the formula for the ammonium, pyridinium and chinolinium compounds, R¹ is a saturated or unsaturated branched or straight-chain alkyl group containing from 10 to 18 carbon atoms; and
R², R³ and R⁴ are independently methyl, benzyl, substituted benzyl or a saturated or unsaturated branched or straight-chain alkyl group containing from 10 to 18 carbon atoms; and
X⁻ is a halide anion, an acetate, propionate, methylsulfate or ethylsulfate group or another common counter anion.

4. The formulation according to claim 1, characterized by additionally comprising from 0.01 to 2.0% by weight of non-ionic surfactants.

5. The formulation according to claim 4, characterized in that ethoxylates of branched and unbranched fatty alcohols containing from 4 to 14 carbon atoms and from 2 to 20 ethylene oxide moieties, or ethoxylates of vegetable oils or fatty acids based on vegetable or animal oils containing from 20 to 50 ethylene oxide moieties are used as said non-ionic surfactants.

6. The formulation according to one or more of claims 1 to 5, characterized by additionally comprising up to 25 mole percent of an anionic surfactant, based on the amine component.

7. The formulation according to claim 6, characterized in that said anionic surfactant is selected from the group of sulfates of saturated or unsaturated alcohols containing from 8 to 18 carbon atoms, and triethanolamine salts of alkylethercarboxylic acids containing from 8 to 12 carbon atoms.

8. The formulation according to claim 1, characterized in that said terpene component is acyclic, monocyclic or bicyclic.

9. The formulation according to claim 1, characterized in that said terpene component contains at least one double bond.

10. Use of the formulation according to one or more of claims 1 to 9 for disinfecting inanimate surfaces.

11. Use of the formulation according to one or more of claims 1 to 9 as a cleaning agent for inanimate surfaces.

12. The use according to claim 10 or 11, characterized in that said surfaces are selected from plastics, silicone, ceramics, glass, stainless steel, noble metals, aluminum, chromium, nickel, artificial leather, rubber or painted surfaces.

## Revendications

1. Préparation désinfectante pulvérisable ayant un pH de 7 à moins de 10 comprenant, outre de l'eau,
(a) 30 à 70 % en poids d'éthanol,
(b) 0,02 à 1 % en poids d'au moins un composant amine de formule ci-dessous
H[HNCH₂CH₂CH₂]ₙ-NR[CH₂CH₂CH₂NH]ₚH (I)
et/ou
H[HN-CH₂CH₂CH₂]_{q}-NH-CH₂CH₂CH₂NHR (II)
où n, p et q peuvent valoir indépendamment l'un de l'autre 1, 2 ou 3, et le substituant R est un radical alkyle à chaîne linéaire ou ramifiée, saturée, insaturée ou cyclique, comportant de 6 à 18 atomes de carbone, ou leurs mélanges,
(c) 0,2 à 2 % en poids d'au moins un hydrocarbure terpénique,
toujours par rapport à la quantité totale de la préparation aqueuse.

2. Préparation selon la revendication 1, comprenant en outre 0,01 à 2,0 % en poids d'un composé qui est choisi parmi les composés d'ammonium quaternaire, de pyridinium, de quinolinium, ainsi que les guanures, les biguanures, les polyguanures, les benzamidines et leurs sels.

3. Préparation selon la revendication 2, caractérisée en ce que
- les composés d'ammonium sont choisis parmi les composés de formule [NR¹R²R³R⁴]^{A}X-
- les composés de pyridinium sont choisis parmi les composés de formule développée 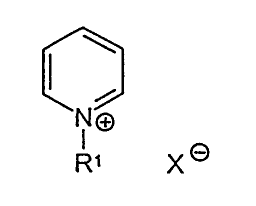
- et les composés de quinolinium sont choisis parmi les composés de formule développée 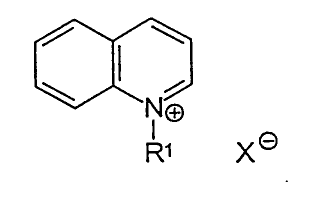 où dans les formules pour les composés d'ammonium, de pyridinium et de quinolinium, R¹ représente un groupe alkyle saturé ou insaturé, ramifié ou linéaire, comportant 10 à 18 atomes de carbone et
R², R³ et R⁴ représentent indépendamment l'un de l'autre un groupe méthyle, benzyle, benzyle substitué ou un groupe alkyle saturé ou insaturé, ramifié ou linéaire ayant 10 à 18 atomes de carbone, et
X- représente un anion halogène, un groupe acétate, propionate, méthyl- ou éthylsulfate ou un autre contre-anion habituel.

4. Préparation selon la revendication 1, caractérisée en ce qu'elle contient en outre 0,01 à 2,0 % en poids d'agents tensioactifs non ioniques

5. Préparation selon la revendication 4, caractérisée en ce qu'on utilise comme agents tensioactifs non ioniques des éthoxylates d'alcools gras ramifiés et non ramifiés contenant 4 à 14 atomes de carbone, avec 2 à 20 unités oxyde d'éthylène ou des éthoxylates d'huiles végétales ou d'acides gras d'huiles végétales ou animales avec 20 à 50 unités d'oxyde d'éthylène.

6. Préparation selon une ou plusieurs des revendications 1 à 5, caractérisée en ce qu'elle comprend en outre jusqu'à 25 % molaire, sur la base du composant amine, d'un agent tensioactif anionique.

7. Préparation selon la revendication 6, caractérisé en ce que l'agent tensioactif anionique est choisi dans le groupe des sulfates d'alcools saturés ou insaturés contenant 8 à 18 atomes de carbone et des sels de triéthanolamine d'acides alkyléther carboxyliques contenant 8 à 12 atomes de carbone.

8. Préparation selon la revendication 1, caractérisée en ce que le composant terpénique est acyclique, mono- ou bicyclique.

9. Préparation selon la revendication 8, caractérisée en ce que le composant terpénique contient au moins une double liaison.

10. Utilisation de la préparation selon une ou plusieurs des revendications 1 à 9 pour la désinfection des surfaces inanimées.

11. Utilisation de la préparation selon une ou plusieurs des revendications 1 à 9 comme produit de nettoyage pour des surfaces inanimées.

12. Utilisation selon la revendication 10 ou 11, caractérisée en ce que les surfaces sont choisies parmi la matière plastique, le silicone, la céramique, le verre, l'acier spécial, le métal noble, l'aluminium, le chrome, le nickel, le similicuir, le caoutchouc synthétique ou les surfaces vernies.
